Europäisches Patentamt

European Patent Office

Office européen des brevets

(19)

(11) Numéro de publication: **0 012 694**
**B1**

(12)

# FASCICULE DE BREVET EUROPEEN

(45) Date de publication du fascicule du brevet: **17.11.82**

(51) Int. Cl.³: **B 60 C 3/00, B 29 H 17/00**

(21) Numéro de dépôt: **79401010.8**

(22) Date de dépôt: **13.12.79**

(54) Pneumatique à carcasse radiale précontrainte.

(30) Priorité: **15.12.78 FR 7835731**

(43) Date de publication de la demande:
**25.06.80 Bulletin 80/13**

(45) Mention de la délivrance du brevet:
**17.11.82 Bulletin 82/46**

(84) Etats contractants désignés:
**DE SE**

(56) Documents cités:
**DE - A - 2 541 504**
**FR - A - 2 120 421**
**FR - A - 2 224 313**
**FR - A - 2 279 574**
**FR - A - 2 281 239**
**FR - A - 2 337 050**
**US - A - 3 961 657**
**US - A - 4 044 810**

(73) Titulaire: **MICHELIN & CIE (Compagnie Générale des Etablissements Michelin) Société dite:**
**4 rue du Terrail**
**F-63000 Clermont-Ferrand (FR)**

(72) Inventeur: **Pommier, Jean**
**17 rue Edmond Rostand**
**F-63100 Clermont-Ferrand (FR)**

(74) Mandataire: **Renaudie, Jacques et al,**
**Michelin & Cie Sce K-Brevets**
**F-63040 Clermont-FD Cedex (FR)**

Courier Press, Leamington Spa, England.

Pneumatique à carcasse radiale précontrainte

L'invention concerne les pneumatiques formés d'un sommet, de deux épaules, de deux flancs et de deux bourrelets et dotés d'une armature de carcasse coiffée d'une armature de sommet, l'armature de carcasse étant constituée, pour l'essentiel, d'au moins une nappe de fils ou câbles radiaux ancrée à au moins une tringle dans chaque bourrelet, l'armature de sommet étant constituée d'au moins deux nappes de fils ou câbles parallèles entre eux dans chaque nappe et croisés d'une nappe à l'autre.

Les pneumatiques de l'espèce définie ci-dessus sont habituellement vulcanisés de façon que la forme du pneumatique dans le moule soit aussi voisine que possible de la forme qu'il prend lorsqu'il est monté sur sa jante de service, gonflé à la pression de service, mais non chargé. En particulier on cherche par la vulcanisation à conférer à l'armature de carcasse (ou à la fibre moyenne de celle-ci lorsque cette armature est formée de plusieurs nappes accolées) un profil méridien d'équilibre qui corresponde à celui qu'elle prend lorsque le pneumatique est monté, gonflé (à sa pression de service) mais non chargé. De préférence, ce profil méridien d'équilibre au gonflage est le profil méridien d'équilibre naturel défini par la relation usuelle

$$\cos\varphi = \frac{R^2 - R_e^2}{R_s^2 - R_e^2},$$

dans laquelle $\varphi$ est l'angle formé par la tangente à la fibre moyenne au point de cette fibre de distance radiale R par rapport à l'axe de rotation du pneumatique, et une parallèle à cet axe de rotation, $R_s$ est la distance du point de la fibre moyenne où l'angle $\varphi$ est nul et $R_e$ la distance du point de la fibre moyenne où l'angle $\varphi$ est égal à 90°, par rapport à l'axe de rotation.

Lorsqu'on gonfle un tel pneumatique naissent des contraintes initiales dans les différentes parties (bourrelets, flancs, épaules, sommet) du pneumatique sous l'effet de la pression de gonflage. Dans le pneumatique en roulage, des contraintes de service se superposent aux contraintes initiales. Cette superposition de contraintes peut provoquer un manque d'endurance du pneumatique et sa mise hors d'usage prématurée.

Le document FR—A—2279 574 divulgue (figure 3) un pneumatique dans la position moulée et dans la position gonflée par rapport à la forme naturelle qu'il ne prend pas au gonflage du fait de sa structure interne. La position de la largeur axiale maximale de la section radiale du pneumatique gonflé est à une distance de la ligne de base des bourrelets inférieure à la distance de la largeur axiale maximale de la section radiale du pneumatique moulé. Ces deux distances sont supérieures à la distance de la largeur axiale maximale de la section radiale d'un pneumatique gonflé dans la forme naturelle. D'après ce document, le gonflage du pneumatique solliciterait les bords de la bande de roulement radialement vers l'intérieur, assurant l'obtention d'un rayon de la bande de roulement constant sur toute la largeur de la bande de roulement, le pneumatique étant gonflé mais non chargé, et assurant ainsi une usure égale de la bande de roulement. Il en résulterait le déplacement de l'épaule du pneumatique moulé radialement vers l'intérieur en direction de la forme naturelle du pneumatique et le déplacement de la surface du flanc du pneumatique moulé axialement vers l'extérieur en direction de la forme naturelle du pneumatique au cours du gonflage. Ces déplacements tendraient à diminuer la tension dans les flancs et ainsi à accroître la durée de vie du pneumatique.

Les contraintes nuisibles auxquelles se propose de remédier l'invention sont notamment les suivantes. Des tensions exagérées dans la gomme extérieure de la zone des épaules du pneumatique peuvent faire appa-raître des cassures de fatigue. Ces tensions peuvent aussi provoquer la propagation de blessures occasionnées par les roulages sur des sols agressifs.

Des compressions importantes des éléments qui forment l'ancrage, notamment du retournement autour de la tringle de bourrelet, de l'armature de carcasse, compressions dont les valeurs culminent au voisinage des zones d'appui du pneumatique sur les rebords de jante, peuvent entraîner la destruction d'un ou plusieurs de ces éléments et, par suite, la mise hors d'usage prématurée du pneumatique.

L'idée-mère de l'invention consiste à conférer au pneumatique, et plus particulièrement à son armature, tel qu'il est monté sur la jante de roue correspondante, mais dépourvu de pression de gonflage et de charge, une forme telle que les déformations dues à la pression de gonflage de service engendrent des contraintes initiales de compression dans la gomme des épaules et des contraintes initiales de tension au niveau des retournements de l'armature de carcasse dans les bourrelets, la forme du pneumatique monté sur sa jante, non gonflé et non chargé, lui étant donnée dans le moule de vulcanisation.

En conséquence, le pneumatique de l'espèce considérée vu en section radiale, monté sur sa jante de service et non chargé, tel que visible sur la planche de dessin annexée dont les références figurent ci-après est remarquable en ce que

a) la fibre méridienne moyenne (7') de l'armature de carcasse (7) du pneumatique non gonflé (1') et la fibre méridienne moyenne (7") de l'armature de carcasse (7) du pneumatique gonflé (1") à sa pression nominale ont un point d'intersection (E$_I$) situé entre les points (E') de la fibre moyenne (7') de l'armature de carcasse (7) du pneumatique non gonflé (1') et (E'') de la fibre moyenne (7'') de l'armature de carcasse (7) du pneumatique gonflé (1'') auxquels (E', E'') lesdites fibres moyennes (7', 7'') ont une tangente commune (t$_E$) perpendiculaire à l'axe de rotation (XX') du pneumatique (1) et située à une distance axiale (Z$_E$) du plan équatorial (ZZ').

b) la fibre méridienne moyenne (7') de l'armature de carcasse (7) du pneumatique non gonflé (1') a un segment (S E$_I$), compris entre le point (S) où l'armature de carcasse (7) devient parallèle à l'armature de sommet (8) et ledit point d'intersection (E$_I$), situé radialement et axialement à l'extérieur de la fibre moyenne (7'') de l'armature de carcasse (7) du pneumatique gonflé (1'').

c) la fibre méridienne moyenne (7') de l'armature de carcasse (7) du pneumatique non gonflé (1') a un segment (E$_I$ J'$_T$) compris entre ledit point d'intersection (E$_I$) et le point (J'$_T$) où l'armature de carcasse (7) devient parallèle au contour de la tringle (9), situé radialement à l'extérieur et axialement à l'intérieur de la fibre moyenne (7'') de l'armature de carcasse (7) du pneumatique gonflé (1'').

Lorsque ce pneumatique est destiné à être monté sur une jante à sièges de bourrelets quasi-cylindriques, la fibre moyenne de l'armature de carcasse (7) suit, au moins entre le point (S) à partir duquel l'armature de carcasse (7) est parallèle à l'armature de sommet et la zone du bourrelet (6), des tracés (7', 7'') définis par la relation

$$\cos \varphi = \frac{R^2 - R_e{}^2}{R_s{}^2 - R_e{}^2},$$

dans laquelle $\varphi$ est l'angle formé par la tangente à la fibre moyenne au point de cette fibre de distance radiale R par rapport à l'axe de rotation du pneumatique, et une parallèle à cet axe de rotation, R$_s$ est la distance du point de la fibre moyenne où l'angle $\varphi$ est nul et R$_e$ la distance du point de la fibre moyenne où l'angle $\varphi$ est égal à 90°, par rapport à l'axe de rotation, les tracés (7', 7'') des fibres moyennes de l'armature de carcasse (7) du pneumatique non gonflé (1') et gonflé (1'') à sa pression de service ayant d'une part en commun le point (S), à partir duquel l'armature de carcasse (7) devient parallèle à l'armature de sommet (8), situé à des distances radiale (R$_s$) de l'axe de rotation (XX') et axiale (Z$_s$) du plan équatorial (ZZ'), ces tracés (7', 7'') étant d'autre part situés à la même distance axiale (Z$_E$) du plan équatorial (ZZ') aux points (E', E'') où ils ont une tangente unique (t$_E$) perpendiculaire à l'axe de rotation (XX'), et les prolongements (74', 74'') de ces tracés (7', 7'') passant en outre dans la zone des bourrelets (6) par des points (J', J'') situés à la même distance axiale (Z$_J$) du plan équatorial (ZZ') que le point (J'$_T$) où l'armature de carcasse devient parallèle au contour de la tringle (9), mais à une distance radiale (R$_{J''}$) de l'axe de rotation (XX'), en ce qui concerne le point (J'') correspondant à la fibre moyenne (7'') du pneumatique (1'') gonflé à sa pression de service, inférieure à celle (R$_{J'}$) du point (J') correspondant à la fibre moyenne (7') du pneumatique non gonflé (1').

Lorsque ce pneumatique est destiné à être monté sur une jante à sièges de bourrelet tronconiques inclinés à 15° environ par rapport à l'axe de rotation, la fibre moyenne de l'armature de carcasse (7) suit, au moins entre le point (S) à partir duquel l'armature de carcasse (7) est parallèle à l'armature de sommet et la zone du bourrelet (6), des tracés (7, 7'') définis par la relation

$$\cos \varphi = \frac{R^2 - R_e{}^2}{R_s{}^2 - R_e{}^2},$$

les paramètres $\varphi$, R, R$_e$, R$_s$ étant les mêmes que ceux mentionnés plus haut, les tracés (7', 7'') des fibres moyennes de l'armature de carcasse (7) du pneumatique non gonflé (1') et gonflé (1'') à sa pression de service ayant d'une part en commun le point (8), à partir duquel l'armature de carcasse (7) devient parallèle à l'armature de sommet (8), situé à des distances radiale (R$_s$) de l'axe de rotation (XX') et axiale (Z$_s$) du plan équatorial (ZZ'), ces tracés (7', 7'') étant d'autre part situés à la même distance axiale (Z$_E$) du plan équatorial (ZZ') aux points (E', E'') où ils ont une tangente unique (t$_E$) perpendiculaire à l'axe de rotation (XX'), et le prolongement (74') du tracé (7') de la fibre moyenne de l'armature de carcasse (7) du pneumatique non gonflé (1') passant par un point (J') et le tracé (7'') de la fibre moyenne de l'armature de carcasse du pneumatique gonflé (1'') passent par un point J'' dans la zone des bourrelets (6), points (J', J'') situés à la même distance axiale (Z$_J$) du plan équatorial (ZZ') que le point (J'$_T$) où l'armature de carcasse devient parallèle au contour de la tringle (9), mais à une distance radiale (R$_{J''}$) de l'axe de rotation (XX'), en ce qui concerne le point (J'') correspondant à la fibre moyenne (7'') du pneumatique (1'') gonflé à sa pression de service, inférieure à celle (R$_{J'}$) du point (J') correspondant à la fibre moyenne (7') du pneumatique non gonflé (1').

Il est avantageux d'utiliser une armature de carcasse inextensible au moins entre le point à partir duquel l'armature de carcasse est parallèle à l'armature de sommet jusqu'au point à partir duquel elle est parallèle au contour de la tringle.

L'inextensibilité de l'armature de carcasse est telle que, soumise à un effort de tension égal à 10% de sa tension de rupture, l'armature de carcasse subit un allongement relatif inférieure à 0,5% et de préférence inférieur à 0,2%. De préférence, on utilise une armature de carcasse formée, pour l'essentiel, d'une nappe unique de câbles d'acier qui satisfont à la définition d'inextensibilité ci-dessus.

Le moyen pour donner au pneumatique selon l'invention et plus particulièrement à son armature de carcasse la forme correspondant au pneumatique monté sur sa jante, non chargé et non gonflé, consiste à vulcaniser le pneumatique dans un moule correspondant à cette forme. La jante sur laquelle est effectuée la vulcanisation du pneumatique correspond de préférence à la jante de service à laquelle est destiné le pneumatique.

Cependant, on peut vulcaniser le pneumatique selon l'invention sur une jante de largeur (telle que définie par les normes en usage) inférieure à celle de la jante de service. Par ce moyen on augmente les contraintes initiales de compression aux épaules et les contraintes initiales de tension au niveau des bourrelets.

Un moyen préférentiel pour maintenir la forme conférée au pneumatique et notamment à l'armature de calui-ci, par la vulcanisation, est d'ancrer l'armature de carcasse à la tringle au moyen d'un retournement, l'extrémité du brin retourné étant disposée à une distance radiale comprise entre 10% et 60% de la hauteur radiale du pneumatique, à l'extérieur de la tringle de bourrelet.

On utilise, pour définir le tracé des fibres méridiennes moyennes de l'armature de carcasse du pneumatique selon l'invention qui correspondent aux deux états non gonflé et gonflé à la pression de service, la relation citée plus haut:

$$\cos \varphi = \frac{R^2 - R_e^2}{R_s^2 - R_e^2},$$

Cette relation définit les profils d'équilibre naturels de l'armature de carcasse pour les deux états gonflé et non gonflé, comme expliqué à l'aide d'un exemple d'exécution de l'invention décrit ci-après avec référence au dessin qui montre une demi-coupe radiale schématisée d'un pneumatique selon l'invention.

Le pneumatique 1 est monté sur une jante normale 2, dite de service, à siège de bourrelet 2′ quasi-cylindrique (conicité 5° environ). La demi-largeur de la jante 2 par rapport à la trace ZZ′ du plan équatorial, telle que prévue par les normes en usage, est égale à la quantité L/2.

Le pneumatique 1 est formé d'un sommet 3, de deux épaules 4, de deux flancs 5 et de deux bourrelets 6 prenant assise sur la jante 2; sa paroi intérieure n'a pas été dessinée.

En trait plein est représenté le pneumatique 1′ non gonflé et non chargé, c'est-à-dire tel qu'il a été vulcanisé. En trait interrompu est représenté le pneumatique 1″ gonflé à sa pression de service et non chargé. La pression de service est la pression nominale prévue par les normes en usage ou par le fabricant.

La fibre moyenne de l'armature de carcasse 7 suit le tracé 7′ pour le pneumatique 1′ non gonflé, et le tracé 7″ pour le pneumatique 1″

gonflé à sa pression nominale. Dans l'exemple choisi, l'armature de carcasse 7 est formée d'une nappe de câbles d'acier continue d'un bourrelet 6 à l'autre et partiellement représentée dans le sommet 3.

L'armature de sommet est symbolisée par un bloc 8 dont la courbure méridienne est plus faible que celle de l'armature de carcasse 7 disposée radialement à l'intérieur de l'armature de sommet 8.

Sur la figure 1 (non à l'échelle) l'axe de rotation du pneumatique 1 est symbolisé par la droite XX′ perpendiculaire à la trace ZZ′ du plan équatorial du pneumatique sur le plan du dessin.

Dans les pneumatiques de l'espèce décrite on peut admettre que l'armature de sommet 8 est quasi indéformable sous l'effet de la pression de gonflage.

Ainsi, au point S à partir duquel l'armature de carcasse 7 est parallèle à l'armature de sommet 8, les fibres moyennes correspondant aux deux tracés 7′ et 7″ se confondent pratiquement sous l'armature de sommet 8 et se situent à une distance $R_s$ de l'axe de rotation XX′ et à une distance $Z_s$ de la trace ZZ′ du plan équatorial. A cette distance $R_s$ les fibres moyennes ont également des tangentes $t_s$ pratiquement confondues, parallèles à l'axe de rotation XX′ ou formant un angle très faible avec cet axe.

Conformément à l'une des caractéristiques de l'invention, les points E′ et E″, où les fibres moyennes 7′ respectivement 7″ ont une tangente commune $t_E$ (voir fig. 1A) perpendiculaire à l'axe de rotation XX′ du pneumatique, sont situés à une distance $Z_E$ de la trace ZZ′ du plan équatorial. Pour plus de clarté les points E′ et E″ situés dans le cercle A ont été représentés sur la figure 1A à une échelle agrandie.

L'armature de carcasse 7 est ancrée à la tringle 9 du bourrelet 6 par un brin 71 retourné vers l'extérieur. L'extrémité 72 du brin 71 est disposée à une distance radiale voisine de 40 à 50% de la hauteur H du pneumatique, radialement à l'extérieur de la tringle 9.

Dans cet exemple, d'une part les tracés 7′ et 7″ des fibres moyennes sont raccordés dans la zone du bourrelet 6 comme d'habitude par des arcs 73′ respectivement 73″, de coubure inverse de celle des tracés 7′ et 7″, aux points $J'_T$ respectivement $J''_T$ où l'armature de carcasse 7 touche la tringle 9, à l'état non gonflé respectivement à l'état gonflé à la pression de service. D'autre part, les prolongements 74′, 74″ des profils méridiens d'équilibre 7′ et 7″ aboutissent aux points J′ respectivement J″ situés chacun à une distance $Z_J$ de la trace ZZ′ du plan équatorial, le point J′ étant à une distance $R_{J'}$ et le point J″ à une distance $R_{J''}$ telle que $R_{J'}$ soit supérieure à $R_{J''}$, de l'axe de rotation XX′ du pneumatique.

Le principe à la base de l'invention implique que les longueurs des fibres moyennes 7′ et 7″ de l'armature de carcasse 7, respectivement à l'état non gonflé et à l'état gonflé, soient identiques à 1% près au moins entre le point S où l'armature de carcasse devient parallèle à l'armature de sommet et les points $J'_T$ respectivement $J''_T$ où l'armature de carcasse devient parallèle au contour de la tringle 9. Il convient d'en tenir compte lors des tracés des arcs de raccordement 73' respectivement 73".

Dans certains cas, notamment dans le cas de l'utilisation de jantes normalisées dites à sièges coniques (inclinaison de 15° environ par rapport à l'axe de rotation), la fibre moyenne 7" de l'armature de carcasse 7 à l'état gonflé peut être dépourvue d'inversion de coubure (et, par suite d'arc de raccordement 73") entre le point E" et le point $J''_T$ où l'armature de carcasse 7 devient parallèle au contour de la tringle 9. Alors, les points J" et $J''_T$ sont situés à la même distance radiale $R_{J''}$ de l'axe de rotation et la distance radiale h se définit à partir du rayon $R_{J''}$.

Ainsi, conformément à l'invention, d'une part la fibre moyenne 7' (pneumatique non gonflé) est située radialement et axialement à l'extérieur de la fibre moyenne 7" (pneumatique gonflé) entre le point S et le point d'intersection $E_I$ (fig. 1A) des deux fibres 7' et 7", le point $E_I$ étant situé dans la zone comprise entre les points E' et E" appartenant respectivement à la fibre 7' et à la fibre 7"; d'autre part la fibre 7' (pneumatique non gonflé) est située radialement à l'extérieur mais axialement à l'intérieur de la fibre 7" (pneumatique gonflé) entre le dit point $E_I$ et le point $J'_T$ où l'armature de carcasse 7 devient parallèle au contour de la tringle 9.

L'expérience montre qu'il est avantageux de choisir la distance $h=R_J-R_{J''}$ compris entre 2% et 20% de la hauteur H (telle que définie par les normes en usage) du pneumatique sur sa jante. La valeur relative de la longeur h caractérise le taux de précontrainte du pneumatique 1" (en trait interrompu) selon l'invention, gonflé à la pression nominale.

Comme on le voit à la fig. 1, d'une part dans la région des épaules 4 la surface extérieure du pneumatique gonflé 1" se trouve à la fois axialement et radialement à l'intérieur de la surface extérieure du pneumatique 1' soumis à une pression nulle; d'autre part, dans la région des points E' et E", la surface extérieure du pneumatique 1 se trouve sensiblement à la même distance de la trace ZZ' du plan équatorial. Enfin, dans la région située radialement à l'intérieur de ces points, la surface extérieure du pneumatique gonflé 7" se trouve radialement à l'intérieur et axialement à l'extérieur de la surface extérieure du pneumatique non gonflé 7'. Il en est de même du retournement 71 qui se trouve déplacé de la position 71' à la position 71" par la pression de gonflage.

Ainsi, les épaules 4 sont mises initialement en compression et les composants de la zone des bourrelets 6, notamment le retournement 71, sont mis initialement en extension lorsqu'on gonfle à sa pression nominale le pneumatique monté 1'.

Compte tenu du taux de précontrainte caractérisé par la distance $h=(R_J-R_{J''})$ on trace les deux fibres moyennes 7" et 7' de l'armature de carcasse 7 à partir de la relation paramétrique

$$\cos \varphi = \frac{R^2-R_e^2}{R_s^2-R_e^2},$$

Tout d'abord, le tracé 7" (état gonflé) est défini par les points S $(R_s, Z_s)$, J" $(R_{J''}, Z_J)$ et la distance $Z_E$ du point E" à tangente perpendiculaire à l'axe de rotation XX'. Ensuite, le tracé 7' est défini par les points S $(R_s, Z_s)$, J' $(R_{J'}, Z_J)$ et la distance $Z_E$ du point E' à tangente perpendiculaire à l'axe de rotation XX'.

## Revendications

1. Pneumatique (1) formé d'un sommet (3), de deux épaules (4), de deux flancs (5) et de deux bourrelets (6), et doté d'une armature de carcasse (7) coiffée par une armature de sommet (8), l'armature de carcasse (7) étant constituée, pour l'essentiel, d'au moins une nappe (7) de fils ou câbles radiaux ancrée à au moins une tringle (9) dans chaque bourrelet (6), l'armature de sommet (8) étant constituée d'au moins deux nappes de fils ou câbles parallèles entre eux dans chaque nappe et croisés d'une nappe à l'autre, ce pneumatique (1), destiné à être monté sur une jante (2) à sièges de bourrelet quasi cylindriques (2'), étant caractérisé en ce que, le pneumatique (1) étant considéré en section radiale, monté sur sa jante de service (2) et non chargé,

a) la fibre méridienne moyenne (7') de l'armature de carcasse (7) du pneumatique non gonflé (1') et la fibre méridienne moyenne (7") de l'armature de carcasse (7) du pneumatique gonflé (1") à sa pression nominale ont un point d'intersection $(E_I)$ situé entre les points (E') de la fibre moyenne (7') de l'armature de carcasse (7) du pneumatique non gonflé (1') et (E") de la fibre moyenne (7") de l'armature de carcasse (7) du pneumatique gonflé (1") auxquels (E', E") leadites fibres moyennes (7', 7") ont une tangente commune ($t_E$) perpendiculaire à l'axe de rotation (XX') du pneumatique (1) et située à une distance axiale ($Z_E$) du plan équatorial (ZZ'),

b) la fibre méridienne moyenne (7') de l'armature de carcasse (7) du pneumatique non gonflé (1') a un segment (S $E_I$), compris entre le point (S) où l'armature de carcasse (7) devient parallèle à l'armature de sommet (8) et ledit point d'intersection $(E_I)$, situé radialement et axialement à l'extérieur de la fibre moyenne (7") de l'armature de carcasse (7) du pneumatique gonflé (1"),

c) la fibre méridienne moyenne (7') de l'armature de carcasse (7) du pneumatique non gonflé (1') a un segment $(E_I J'_T)$ compris entre ledit point d'intersection $(E_I)$ et le point $(J'_T)$ où l'armature de carcasse (7) devient parallèle au contour de la tringle (9), situé radialement à l'extérieur et axialement à l'intérieur de la fibre moyenne (7") de l'armature de carcasse (7) du pneumatique gonflé (1"),

d) la fibre moyenne de l'armature de carcasse (7) suit, au moins entre le point (S) à partir duquel l'armature de carcasse (7) est parallèle à l'armature de sommet et la zone du bourrelet (6), des tracés (7', 7") définis par la relation

$$\cos \varphi = \frac{R^2 - R_e^2}{R_s^2 - R_e^2},$$

dans laquelle $\varphi$ est l'angle formé par la tangente à la fibre moyenne au point de cette fibre de distance radiale R par rapport à l'axe de rotation du pneumatique, et une parallèle à cet axe de rotation, $R_s$ est la distance du point de la fibre moyenne où l'angle $\varphi$ est nul et $R_e$ la distance du point de la fibre moyenne où l'angle $\varphi$ est égal à 90°, par rapport à l'axe de rotation, les tracés (7', 7") des fibres moyennes de l'armature de carcasse (7) du pneumatique non gonflé (1') et gonflé (1") à sa pression de service ayant en commun le point (S), à partir duquel l'armature de carcasse (7) devient parallèle à l'armature de sommet (8), situé à des distances radiale ($R_s$) de l'axe de rotation (XX') et axiale ($Z_s$) du plan équatorial (ZZ'), et les prolongements (74', 74") de ces tracés (7', 7") passant en outre dans la zone des bourrelets (6) par des points (J', J") situés à la même distance axiale ($Z_J$) du plan équatorial (ZZ') que le point ($J'_T$) où l'armature de carcasse (7) devient parallèle au contour de la tringle (9), mais à une distance radiale ($R_{J''}$) de l'axe de rotation (XX'), en ce qui concerne le point (J") correspondant à la fibre moyenne (7") du pneumatique (1") gonflé à sa pression de service, inférieure à celle ($R_{J'}$) du point (J') correspondant à la fibre moyenne (7') du pneumatique non gonflé (1').

2. Pneumatique (1) formé d'un sommet (3), de deux épaules (4), de deux flancs (5) et de deux bourrelets (6), et doté d'une armature de carcasse (7) coiffée par une armature de sommet (8), l'armature de carcasse (7) étant constituée, pour l'essentiel, d'au moins une nappe (7) de fils ou câbles radiaux ancrée à au moins une tringle (9) dans chaque bourrelet (6), l'armature de sommet (8) étant consitituée d'au moins deux nappes de fils ou câbles parallèles entre eux dans chaque nappe et croisés d'une nappe à l'autre, ce pneumatique (1), destiné à être monté sur une jante à sièges de bourrelet tronconiques inclinés à 15° environ par rapport à l'axe de rotation, étant caractérisé en ce que, le pneumatique (1) étant considéré en section radiale, monté sur sa jante de service (2) et non chargé,

a) la fibre méridienne moyenne (7') de l'armature de carcasse (7) du pneumatique non gonflé (1') et la fibre méridienne moyenne (7") de l'armature de carcasse (7) du pneumatique gonflé (1") à sa pression nominale ont un point d'intersection ($E_I$) situé entre les points (E') de la fibre moyenne (7') de l'armature de carcasse (7) du pneumatique non gonflé (1') et (E") de la fibre moyenne (7") de l'armature de carcasse (7) du pneumatique gonflé (1") auxquels (E', E") lesdites fibres moyennes (7', 7") ont une tangente commune ($t_E$) perpendiculaire à l'axe de rotation (XX') du pneumatique (1) et située à une distance axiale ($Z_E$) du plan équatorial (ZZ').

b) la fibre méridienne moyenne (7') de l'armature de carcasse (7) du pneumatique non gonflé (1') a un segment (S $E_I$), compris entre le point (S) où l'armature de carcasse (7) devient parallèle à l'armature de sommet (8) et ledit point d'intersection ($E_I$), situé radialement et axialement à l'extérieur de la fibre moyenne (7") de l'armature de carcasse (7) du pneumatique gonflé (1"),

c) la fibre méridienne moyenne (7') de l'armature de carcasse (7) du pneumatique non gonflé (1') a un segment ($E_I$ $J'_T$) compris entre ledit point d'intersection ($E_I$) et le point ($J'_T$) où l'armature de carcasse (7) devient parallèle au contour de la tringle (9), situé radialement à l'extérieur et axialement à l'intérieur de la fibre moyenne (7") de l'armature de carcasse (7) du pneumatique gonflé (1").

d) la fibre moyenne de l'armature de carcasse (7) suit, au moins entre le point (S) à partir duquel l'armature de carcasse (7) est parallèle à l'armature de sommet et la zone du bourrelet (6), des tracés (7', 7") définis par la relation

$$\cos \varphi = \frac{R^2 - R_e^2}{R_s^2 - R_e^2}$$

dans laquelle $\varphi$ est l'angle formé par la tangente à la fibre moyenne au point de cette fibre de distance radiale R par rapport à l'axe de rotation du pneumatique, et une parallèle à cet axe de rotation, $R_s$ est la distance du point de la fibre moyenne où l'angle $\varphi$ est nul et $R_e$ la distance du point de la fibre moyenne où l'angle $\varphi$ est égal à 90°, par rapport à l'axe de rotation, les tracés (7', 7") des fibres moyennes de l'armature de carcasse (7) du pneumatique non gonflé (1') et gonflé (1") à sa pression de service ayant en commun le point (S), à partir duquel l'armature de carcasse (7) devient parallèle à l'armature de sommet (8), situé à des distances radiale ($R_s$) de l'axe de rotation (XX') et axiale ($Z_s$) du plan équatorial (ZZ'), le prolongement (74') du tracé (7') de la fibre moyenne de l'armature de carcasse (7) du pneumatique non gonflé (1') passant par un point (J') et le tracé (7") de la fibre moyenne de l'armature de carcasse du pneumatique gonflé (1") passant par un point J" dans la zone des bourrelets (6), points (J', J") situés à la même distance axiale ($Z_J$) du plan équatorial (ZZ') que le point ($J'_T$) où l'armature de carcasse (7) devient parallèle au contour de la tringle (9), mais à une distance radiale ($R_{J''}$) de l'axe de rotation (XX'), en ce qui concerne le point (J″) correspondant à la fibre moyenne (7″) du pneumatique (1″) gonflé à sa pression de service, inférieure à celle ($R_{J'}$) du point (J′) correspondant à la fibre moyenne (7′) du pneumatique non gonflé (1′).

3. Pneumatique selon la revendication 1, caractérisé en ce que la différence (h) des distances radiales ($R_{J'}$, $R_{J''}$) des points (J′, J″) des prolongements (74′, 74″) des tracés (7′, 7″) des fibres moyennes, situés à la même distance axiale ($Z_J$) du plan équatorial (ZZ′), dans la zone des bourrelets (6), est comprise entre 2% et 20% de la hauteur (H) du pneumatique.

4. Pneumatique selon la revendication 2, caractérisé en ce que la différence (h) de la distance radiale ($R_{J'}$) du point (J′) du prolongement (74′) du tracé (7′) de la fibre moyenne de l'armature de carcasse (7) du pneumatique non gonflé et du point (J″) du tracé (7″) de la fibre moyenne de l'armature de carcasse (7) de pneumatique gonflé, points (J′, J″) situés à la même distance axiale ($Z_J$) du plan équatorial (ZZ′), dans la zone des bourrelets (6), est comprise entre 2% et 20% de la hauteur (H) du pneumatique.

5. Pneumatique selon les revendications 1 à 4, caractérisé en ce que l'armature de carcasse (7), au moins entre le point (S) à partir duquel elle est parallèle à l'armature de sommet (8) et le point ($J'_T$) à partir duquel elle est parallèle au contour de la tringle de bourrelet (9), a un allongement relatif inférieur à 0,5% et de préférence à 0,2% sous un effort de tension égal à 10% de sa tension de rupture.

6. Pneumatique selon l'une des revendications 1 à 5, caractérisé en ce que, pour l'essentiel, l'armature de carcasse (7) est formée d'une nappe unique de câbles d'acier.

7. Pneumatique selon l'une des revendications 1 à 6, caractérisé en ce que l'armature de carcasse (7) est ancrée à la tringle (9) au moyen d'un brin retourné (71) dont l'extrémité (72) est située à une distance radiale comprise entre 10% et 60% de la hauteur radiale (H) du pneumatique (1), à l'extérieur de la tringle de bourrelet (9).

8. Pneumatique selon l'une des revendications 1 à 7, caractérisé en ce que la forme du pneumatique, et plus particulièrement de son armature de carcasse (7) correspondant au pneumatique (1′) monté sur sa jante de service, non gonflé et non chargé, est obtenue en vulcanisant le pneumatique dans un moule correspondant à cette forme.

9. Pneumatique selon la revendication 8, caractérisé en ce que le pneumatique (1′) est vulcanisé sur une jante de largeur inférieure à la largeur (L) de la jante (2) de service à laquelle est destiné le pneumatique (1).

10. Pneumatique selon les revendications 1 à 9, caractérisé en ce que les longueurs des fibres méridiennes moyennes (7′) de l'armature de carcasse (7) du pneumatique non gonflé (1′) et (7″) de l'armature de carcasse (7) du pneumatique gonflé (1″), au moins entre les points (S) où l'armature de carcasse (7) devient parallèle à l'armature de sommet (8) et ($J'_T$) ($J''_T$) où l'armature de carcasse (7) devient parallèle au contour de la tringle (9), diffèrent d'au plus 1%.

**Patentansprüche**

1. Luftreifen (1) bestehend aus einer Krone (3), zwei Schultern (4), zwei Seitenwänden (5) und zwei Wulsten (6) und mit einer mit einer radial darüber angeordneten Laufstreifenbewehrung (8) versehenen Karkassenbewehrung (7), wobei die Karkassenbewehrung (7) im wesentlichen von mindestens einer Lage (7) radialer Fäden oder Seile an mindestens einem Wulstring (9) in jeder Wulst (6) befestigten und die Laufstreifenbewehrung (8) aus mindestens zwei Lagen zueinander parallel verlaufenden und von einer Lage zur anderen gekreusten Fäden oder Seile gebildet ist, und dieser zur Montage auf einer Felge (2) mit quasizylindrischen Wulstsitzen (2′) bestimmter Luftreifen dadurch gekennzeichnet ist, daß in dem auf seiner Betriebsfelge (2) montierten und nicht belasteten, im Radialschnitt betrachten Reifen (1),

a) die mittlere Faser (7′) der Karkassenbewehrung (7) des nicht aufgepumpten Reifens (1′) und die mittlere Faser (7″) der Karkassenbewehrung (7) des auf seinen Betriebsdruck aufgepumpten Reifens (1″) sich in einem Punkt ($E_i$) schneiden, der sich zwischen den Punkten (E′) der mittleren Faser (7′) der Karkassenbewehrung (7) des nicht aufgepumpten Reifens (1′) und (E″) der mittleren Faser (7″) der Karkassenbewehrung (7) des aufgepumpten Reifens (1″) befindet, an denen (E′, E″) diese mittleren Fasern (7′, 7″) eine gemeinsame, zur Umdrehungsachse (XX′) des Reifens (1) senkrecht stehende und in einer axialen Entfernung (ZE) von der Äquatorialebene (ZZ′) sich befindende Tangente ($t_E$) haben,

b) die mittlere Faser (7′) der Karkassenbewehrung (7) des nicht aufgepumpten Reifens (1′) einen Abschnitt (S $E_i$) hat, der sich zwischen dem Punkt (S), so die Karkassenbewehrung (7) zur Laufflächenbewehrung (8) parallel zu verlaufen beginnt, und jenem Schnittpunkt ($E_i$) erstreckt und radial sowie achsial außerhalb der mittleren Faser (7″) der Karkassenbewehrung (7) des aufgepumpten Reifens (1″) liegt,

c) die mittlere Faser (7′) der Karkassenbewehrung (7) des nicht aufgepumpten Reifens (1′) einen Abschnitt ($E_i$ $J'_T$) hat, der sich zwischen jenem Schnittpunkt ($E_i$) und dem Punkt ($J'_T$), wo die Karkassenbewehrung (8) zum Umriß des Wulstrings (9) parallel zu verlaufen beginnt, erstreckt und radial außerhalb und achsial innerhalb der mittleren Faser (7″) der Karkassenbewehrung (7) des aufgepumpten Reifens (1″) liegt.

d) die mittlere Faser der Karkassenbewehrung (7) mindestens zwischen dem Punkt (S), von dem die Karkassenbewehrung (7) parallel zur Laufflächenbewehrung (8) verläuft, und dem Wulstbereich (6), Verläufen (7', 7") folgt, die durch die Formel

$$\cos \varphi = \frac{R^2 - R_e^2}{R_s^2 - R_e^2},$$

bestimmt sind, worin $\varphi$ der Winkel ist, der durch die an die mittlere Faser in radialer Entfernung R von der Reifenumdrehungsachse (XX') gezonen Tangente und einer Parallelen zu dieser Umdrehungsachse (XX') gebildet wird, $R_s$ die Entfernung des Punktes der mittleren Faser, wo der Winkel $\varphi$ gleich Null und $R_e$ die Entfernung des Punktes der mittleren Faser in bezug auf die Umdrehungsachse (XX') ist, wo der Winkel $\varphi$ gleich 90° ist, wobei die Verläufe (7', 7") der mittleren Fasern der Karkassenbewehrung (7) des nicht aufgepumpten (1') und des auf seinen Betriebsdruck aufgepumpten Reifens (1") einen gemeinsamen Punkt (S) haben, von dem die Karkassenbewehrung (7) parallel zur Laufflächenbewehrung (8) zu verlaufen beginnt, der radial in einer Entfernung ($R_s$) von der Umdrehungsachse (XX') und achsial in einer Entfernung ($Z_s$) von der Äquatorialebene (ZZ') liegt, und wobei noch die Verlängerungen (74', 74") dieser Verläufe (7', 7") im Wulstbereich (6) durch Punkte (J', J") gehen, die achsial in der selben Entfernung ($Z_l$) von der Äquatorialebene (ZZ') wie der Punkt ($J'_T$) liegen, von dem die Karkassenbewehrung (7) parallel zum Umriß des Wulstringes (9) zu verlaufen beginnt, aber in einer radialen Entfernung ($R_{J''}$) von der Umdrehungsachse (XX') liegen, was den Punkt (J") der mittleren Faser (7") des auf seinen Betriebsdruck aufgepumpten Reifens (1") anbelangt, die kleiner ist als diejenige ($R_{J'}$) des Punktes (J') der mittleren Faser (7') des nicht aufgepumpten Reifens (1').

2. Luftreifen (1) bestehend aus einer Krone (3), zwei Schultern (4), zwei Seitenwänden (5) und zwei Wulsten (6) und mit einer mit einer radial darüber angeordneten Laufstreifenbewehrung (8) versehenen Karkassenbewehrung (7), wobei die Karkassenbewehrung (7) im wesentlichen von mindestens einer Lage (7) radialer Fäden oder Seile an mindestens einem Wulstring (9) in jeder Wulst (6) befestigten und die Laufstreifenbewehrung (8) aus mindestens zwei Lagen zueinander parallel verlaufenden und von einer Lage zur anderen gekreuzten Fäden oder Seile gebildet ist, und dieser zur Montage auf einer Schrägschulterfelge mit etwa mit 15° zur Umdrehungsachse geneigten kegeligen Wulstsitzen bestimmter Luftreifen dadurch gekennzeichnet ist, daß in dem auf seiner Betriebsfelge (2) montierten und nicht belasteten, im Radialschnitt betrachten Reifen (1),

a) die mittlere Faser (7') der Karkassenbewehrung (7), des nicht aufgepumpten Reifens (1') und die mittlere Faser (7") der Karkassenbewehrung (7) des auf seinen Betriebsdruck aufgepumpten Reifens (1") sich in einem Punkt ($E_l$) schneiden, der sich zwischen den Punkten (E') der mittleren Faser (7') der Karkassenbewehrung (7) des nicht aufgepumpten Reifens (1') und (E") der mittleren Faser (7") der Karkassenbewehrung (7) des aufgepumpten Reifens (1") befindet, an denen (E', E") diese mittleren Fasern (7', 7") eine gemeinsame, zur Umdrehungsachse (XX') des Reifens (1) senkrecht stehende und in einer axialen Entfernung ($Z_E$) von der Äquatorialebene (ZZ') sich befindende Tangente ($t_E$) haben,

b) die mittlere Faser (7') der Karkassenbewehrung (7) des nicht aufgepumpten Reifens (1') einen Abschnitt (S $E_l$) hat, der sich zwischen dem Punkt (S), wo die Karkassenbewehrung (7) zur Laufflächenbewehrung (8) parallel zu verlaufen beginnt, und jenem Schnittpunkt ($E_l$) erstreckt und radial sowie achsial außerhalb der mittleren Faser (7") der Karkassenbewehrung (7) des aufgepumpten Reifens (1") liegt,

c) die mittlere Faser (7') der Karkassenbewehrung (7) des nicht aufgepumpten Reifens (1') einen Abschnitt ($E_l$ $J'_T$) hat, der sich zwischen jenem Schnittpunkt ($E_l$) und dem Punkt ($J'_T$), wo die Karkassenbewehrung (8) zum Umriß des Wulstrings (9) parallel zu verlaufen beginnt, erstreckt und radial außerhalb und achsial innerhalb der mittleren Faser (7") der Karkassenbewehrung (7) des aufgepumpten Reifens (1") liegt.

d) die mittlere Faser der Karkassenbewehrung (7) mindestens zwischen dem Punkt (8), von dem die Karkassenbewehrung (7) parallel zur Laufflächenbewehrung (8) verläuft, und dem Wulstbereich (6), Verläufen (7', 7") folgt, die durch die die Formel

$$\cos \varphi = \frac{R^2 - R_e^2}{R_s^2 - R_e^2}$$

bestimmt sind, worin $\varphi$ der Winkel ist, der durch die an die mittlere Faser in radialer Entfernung R von der Reifenumdrehungsachse (XX') gezonen Tangente und einer Parallelen zu dieser Umdrehungsachse (XX') gebildet wird, $R_s$ die Entfernung des Punktes der mittleren Faser, wo der Winkel $\varphi$ gleich Null und $R_e$ die Entfernung des Punktes der mittleren Faser in bezug auf die Umdrehungsachse (XX') ist, wo der Winkel $\varphi$ gleich 90° ist, wobei die Verläufe (7', 7") der mittleren Faser der Karkassenbewehrung (7) des nicht aufgepumpten (1') und des auf seinen Betriebsdruck aufgepumpten Reifens (1") einen gemeinsamen Punkt (S) haben, von dem die Karkassenbewehrung (7) parallel zur Laufflächenbewehrung (8) zu verlaufen beginnt, der radial in einer Entfernung ($R_s$) von der Umdrehungsachse (XX') und achsial in einer Entfernung ($Z_s$) von der Äquatorialebene (ZZ') liegt, und wobei noch die Verlängerung (74') des Verlaufs (7') der mittleren Faser der Karkassenbewehrung (7) des nicht aufgepumpten Reifens (1') durch einen Punkt (J') und der Verlauf (7") der mittleren Faser der Karkassenbewehrung (7) des aufgepumpten Reifens (1″) durch einen Punkt (J″) geht, wobei diese Punkte (J′, J″) achsial in der selben Entfernung (Z$_J$) von der Äquatorialebene (ZZ′) wie der Punkt (J′$_T$) liegen, von dem die Karkassenbewehrung (7) parallel zum Umriß des Wulstringes (9) zu verlaufen beginnt, aber in einer radialen Entfernung (R$_{J''}$) von der Umdrehungsachse (XX) liegen, was den Punkt (J″) der mittleren Faser (7″) des auf seinen Betriebsdruck aufgepumpten Reifens (7″) anbelangt, die kleiner ist als diejenige (R$_{J'}$) des Punktes (J′) der mittleren Faser (7′) des nicht aufgepumpten Reifens (1′).

3. Luftreifen nach Anspruch 1, dadurch gekennzeichnet, daß die Differenz (h) der radialen Entfernungen (R$_{J''}$, R$_{J'}$) der Punkte (J′, J″) der Verlängerungen (74′, 74″) der Verläufe (7′, 7″) der mittleren Fasern, die sich im Wulstbereich (6) in gleicher achsialer Entfernung (Z$_J$) von der Äquatorialebene (ZZ′) befinden, zwischen 2% und 20% der Reifenhöhe (H) beträgt.

4. Luftreifen nach Anspruch 2, dadurch gekennzeichnet, daß die Differenz (h) der radialen Entfernung (R$_{J'}$) des Punktes (J′) der Verlängerung (74′) des Punktes (J′) des Verlaufs (7′) der mittleren Faser der Karkassenbewehrung (7) des nicht aufgepumpten Reifens und des Punktes (J″) des Verlaufs (7″) der mittleren Faser der Karkassenbewehrung (7) des aufgepumpten Reifens, zwischen 2% und 20% der Reifenhöhe (H) beträgt, wobei die Punkte (J′, J″) in gleicher achsialer Entfernung (Z$_J$) von der Äquatorialebene (ZZ′) liegen.

5. Luftreifen nach einem der Ansprüche 1 bis 4, dadurch gekennzeichnet, daß die Karkassenbewehrung (7) wenigstens zwischen dem Punkt (S) von welchem diese (7) parallel zur Laufflächenbewehrung (8) und dem Punkt (J′$_T$) von welchem diese (7) parallel zum Umriß des Wulstringes (9) verläuft, eine unter 0,5% und vorzugsweise unter 0,2% liegende bei 10% ihrer Bruchlast gemessene relative Dehnung besitzt.

6. Luftreifen nach einem der Ansprüche 1 bis 5, dadurch gekennzeichnet, daß die Karkassenbewehrung im wesentlichen aus einer einzigen Stahlseillage besteht.

7. Luftreifen nach einem der Ansprüche 1 bis 6, dadurch gekennzeichnet, daß die Karkassenbewehrung (7) mittels eines umgeschlagenen Teils (71) am Wulstring (9) befestigt ist, dessen Ende (72) sich außerhalb des Wulstrings (9) in einer radialen Entfernung, die zwischen 10% und 60% der radialen Höhe (H) des Reifens (1) liegt, befindet.

8. Luftreifen nach einem der Ansprüche 1 bis 7, dadurch gekennzeichnet, daß die Gestalt des Reifens und insbesondere seiner Karkassenbewehrung (7), die dem auf seiner Betriebsfelge montierten, nicht aufgeblasenen und unbelasteten Reifen (1′) entspricht, durch Vulkanisieren des Reifens in einer dieser Gestalt entsprechenden Vulkanisierform erzeugt wird.

9. Luftreifen nach Anspruch 8, dadurch gekennzeichnet, daß der Reifen (1′) auf einer Felge kleinerer Breite als die (L) der Betriebsfelge (2), für die dieser Reifen (1) bestimmt ist, vulkanisiert wird.

10. Luftreifen nach einem der Ansprüche 1 bis 9, dadurch gekennzeichnet, daß die Längen der mittleren Fasern (7′) der Karkassenbewehrung (7) des nicht aufgeblasenen Reifens (1′) und (7″) der Karkassenbewehrung (7) des aufgeblasenen Reifens mindestens zwischen den Punkten (S) von dem die Karkassenbewehrung (7) zur Laufflächenbewehrung (8) parallel verläuft und (J′$_T$) bzw. (J″$_T$) von dem die Karkassenbewehrung (7) zum Umriß des Wulstrings (9) parallel verläuft, höchstens um 1% verschieden sind.

**Claims**

1. Pneumatic tyre (1) formed of a tread (3), two shoulders (4), two sidewalls (5) and two beads (6) and fitted with a carcass reinforcement (7) capped by a tread reinforcement (8), the carcass reinforcement consisting essentially of at least one ply (7) of radial wires or cables anchored to at least one bead ring (9) in each bead (6), the tread reinforcement (8) consisting of at least two plies of wires or cables which are parallel to each other in each ply and crossed from one ply to the other, this pneumatic tyre (1) intended to be mounted on a rim (2) having almost cylindrical bead seats (2′), being characterized by the fact that, the pneumatic tyre (1) being considered in radial cross-section, mounted on its service rim (2) and not under load,

a) the mean meridian fibre (7′) of the carcass reinforcement (7) of the uninflated pneumatic tyre (1′) and the mean meridian fibre (7″) of the carcass reinforcement (7) of the pneumatic tyre inflated (1″) to its rated pressure have a point of intersection (E$_I$) which is located between the points (E′) of the mean fibre (7′) of the carcass reinforcement (7) of the uninflated tyre (1′) and (E″) of the mean fibre (7″) of the carcass reinforcement (7) of the inflated pneumatic tyre (1″) at which said points (E′, E″) the said mean fibres (7′, 7″) have a common tangent (t$_E$) perpendicular to the axis of rotation (XX′) of the pneumatic tyre (1) and located at an axial distance (Z$_E$) from the equatorial plane (ZZ′),

b) the mean meridian fibre (7′) of the carcass reinforcement (7) of the uninflated pneumatic tyre (1′) has a segment (S E$_I$) contained between the point (S) where the carcass reinforcement (7) becomes parallel to the tread reinforcement (8) and said point of intersection (E$_I$) which is located radially and axially outward of the mean fibre (7″) of the carcass reinforcement (7) of the inflated tyre (1″),

c) the mean meridian fibre (7′) of the carcass reinforcement (7) of the uninflated tyre (1′) has a segment (E$_I$ J′$_T$) contained between said point of intersection (E$_I$) and the point (J′$_T$) where the carcass reinforcement (7) becomes parallel to the contour of the bead ring (9), which is located radially outward and axially inward of the mean fibre (7″) of the carcass reinforcement (7) of the inflated tyre (1″),

d) the mean fibre of the carcass reinforcement follows, at least between the point (S) where the carcass reinforcement (7) is parallel to the tread reinforcement and the zone of the bead (6), traces (7′, 7″) defined by the relationship

$$\cos \varphi = \frac{R^2 - R_e{}^2}{R_s{}^2 - R_e{}^2},$$

in which $\varphi$ is the angle formed by the tangent to the mean fibre at the point of said fibre having a radial distance R from the axis of rotation of the pneumatic tyre and a line parallel to said axis of rotation, $R_s$ is the distance of the point of the mean fibre where the angle $\varphi$ is zero and $R_e$ is the distance of the point of the mean fibre where the angle $\varphi$ is equal to 90°, with respect to the axis of rotation of the tyre, the traces (7′, 7″) of the mean fibres of the carcass reinforcement (7) of the uninflated tyre (1′) and of the tyre inflated (1″) to its service pressure having in common the point (S) located at a radial distance ($R_s$) from the axis of rotation (XX′) of the uninflated tyre (1′) and of the tyre (1″) inflated to its service pressure and, an axial distance ($Z_s$) from the equatorial plane (ZZ′), from which point (S) the carcass reinforcement (7) becomes parallel to the tread reinforcement (8), and the extensions (74′, 74″) of these traces (7′, 7″) furthermore passing in the zone of the beads (6) through points (J′, J″) located at the same axial distance ($Z_J$) from the equatorial plane (ZZ′) as the point ($J'_T$) where the carcass reinforcement (7) becomes parallel to the contour of the bead ring (9), but at a radial distance ($R_{J''}$) from the axis of rotation (XX′), with respect to the point (J″) corresponding to the mean fibre (7″) of the pneumatic tyre (1″) inflated to its service pressure, which is less than that ($R_{J'}$) of the point (J′) corresponding the mean fibre (7′) of the uninflated tyre (1′).

2. Pneumatic tyre (1) formed of a tread (3), two shoulders (4), two sidewalls (5) and two beads (6) and fitted with a carcass reinforcement (7) capped by a tread reinforcement (8), the carcass reinforcement (7) consisting essentially of at least one ply (7) of radial wires or cables anchored to at least one bead ring (9) in each bead (6), the tread reinforcement (8) consisting of at least two plies of wires or cables which are parallel to each other in each ply and crossed from one ply to the other, this pneumatic tyre (1) intended to be mounted on a rim having frustro-conical bead seats inclined at about 15° with respect to the axis of rotation, being characterized by the fact that the pneumatic tyre (1) being considered in radial cross-section, mounted on its service rim (2) and not under load,

a) the mean meridian fibre (7′) of the carcass reinforcement (7) of the uninflated pneumatic tyre (1′) and the mean meridian fibre (7″) of the carcass reinforcement (7) of the pneumatic tyre inflated (1″) to its rated pressure have a point of intersection ($E_I$) which is located between the points (E′) of the mean fibre (7′) of the carcass reinforcement (7) of the uninflated tyre (1′) and (E″) of the mean fibre (7″) of the carcass reinforcement (7) of the inflated pneumatic tyre (1″) at which said points (E′, E″) said mean fibres (7′, 7″) have a common tangent ($t_E$) perpendicular to the axis of rotation XX′ of the pneumatic tyre (1) and located at an axial distance ($Z_E$) from the equatorial plane (ZZ′),

b) the mean meridian fibre (7′) of the carcass reinforcement (7) of the uninflated pneumatic tyre (1′) has a segment (S $E_I$) contained between the point (S) where the carcass reinforcement (7) becomes parallel to the tread reinforcement (8) and said point of intersection ($E_I$) which is located radially and axially outward of the mean fibre (7″) of the carcass reinforcement (7) of the inflated tyre (1″),

c) the mean meridian fibre (7′) of the carcass reinforcement (7) of the uninflated tyre (1′) has a segment ($E_I$ $J'_T$) contained between said point of intersection ($E_I$) and the point ($J'_T$) where the carcass reinforcement (7) becomes parallel to the contour of the bead ring (9), which is located radially outward and axially inward of the mean fibre (7″) of the carcass reinforcement (7) of the inflated tyre (1″),

d) the mean fibre of the carcass reinforcement follows, at least between the point (S) where the carcass reinforcement (7) is parallel to the tread reinforcement and the zone of the bead (6), traces (7′, 7″) defined by the relationship

$$\cos \varphi = \frac{R^2 - R_e{}^2}{R_s{}^2 - R_e{}^2},$$

in which $\varphi$ is the angle formed by the tangent to the mean fibre at the point of said fibre having a radial distance R from the axis of rotation of the pneumatic tyre and a line parallel to said axis of rotation of the pneumatic tyre and a line parallel to said axis of rotation, $R_s$ is the distance of the point of the mean fibre where the angle $\varphi$ is zero and $R_e$ is the distance of the point of the mean fibre where the angle $\varphi$ is equal to 90°, with respect to the axis of rotation, the traces (7′, 7″) of the mean fibres of the carcass reinforcement (7) of the uninflated tyre (1′) and of the tyre inflated (1″) to its service pressure having in common the point (8) located at a radial distance ($R_s$) from the axis of rotation (XX′) of the uninflated tyre (1′) and of the tyre (1″) inflated to its service pressure and at an axial distance ($Z_s$) from the equatorial plane (ZZ′), from which point (S) the carcass reinforcement (7) becomes parallel to the tread reinforcement (8), the extension (74′) of the trace (7′) of the mean fibre of the carcass reinforcement (7) of the uninflated tyre (1′) passing through a point (J') and the trace (7″) of the mean fibre of the carcass reinforcement of the inflated tyre (1″) passing through a point (J″) in the zone of the beads (6), said points (J', J″) being located at the same axial distance $(Z_J)$ from the equatorial plane (ZZ') as the point $(J'_T)$ where the carcass reinforcement (7) becomes parallel to the contour of the bead ring (9), but at a radial distance $(R_{J''})$ from the axis of rotation (XX'), with respect to the point (J″) corresponding to the mean fibre (7″) of the pneumatic (1″) inflated to its service pressure, which is less than that $(R_{J'})$ of the point (J') corresponding to the mean fibre (7') of the uninflated tyre (1').

3. Pneumatic tyre according to claim 1, being characterized by the fact that the difference (h) in the radial distances $(R_{J'}, R_{J''})$ of the points (J', J″) of the extensions (74', 74″) of the traces (7', 7″) of the mean fibres, which are located at the same axial distance $(Z_J)$ from the equatorial plane (ZZ'), in the zone of the beads (6), is included between 2% and 20% of the height (H) of the pneumatic tyre.

4. Pneumatic tyre according to claim 2, being characterized by the fact that the difference (h) in the radial distance $(R_{J'})$ of the point (J') of the extension (74') of the trace (7') of the mean fibre of the carcass reinforcement (7) of the uninflated tyre and of the point (J″) of the trace (7″) of the mean fibre of the carcass reinforcement (7) of the inflated tyre, which points (J', J″) are located at the same axial distance $(Z_J)$ from the equatorial plane (ZZ'), in the zone of the beads (6), is included between 2% and 20% of the height (H) of the pneumatic tyre.

5. Pneumatic tyre according to claims 1 to 4, characterized by the fact that the carcass reinforcement (8) and the point $(J'_T)$ from which it is (S) from which it is parallel to the tread reinforcement (S) and the point $(J'_T)$ from which it is parallel to the contour of the bead ring (9), a relative elongation of less than 0,5% and preferably less than 0,2%, under a tensile force equal to 10% of its tensile strength.

6. Pneumatic tyre according to one of claims 1 to 5, characterized by the fact that the carcass reinforcement (7) is essentially formed of a single ply of steel cables.

7. Pneumatic tyre according to claims 1 to 6, characterized by the fact that the carcass reinforcement (7) is anchored to the bead ring (9) by means of an upward-turned portion (71) the end (72) of which is located at a radial distance of between 10% and 60% of the radial height (H) of the pneumatic tyre (1), outward of the bead ring (9).

8. Pneumatic tyre according to claims 1 to 7, characterized by the fact that the shape of the pneumatic tyre, and more particularly the shape of its carcass reinforcement (7) corresponding to the pneumatic tyre (1') mounted on its service rim, not inflated and not under load, is obtained by vulcanizing the pneumatic tyre in a mould corresponding to said shape.

9. Pneumatic tyre according to claim 8, characterized by the fact that the pneumatic tyre (1') is vulcanized on a rim of a width less than the width (L) of the service rim (2) for which the pneumatic tyre (1) is intended.

10. Pneumatic tyre according to claims 1 to 9, characterized by the fact that the lengths of the mean meridian fibres (7') of the carcass reinforcement (7) of the uninflated pneumatic tyre (1') and (7″) of the carcass reinforcement (7) of the inflated pneumatic tyre (1″) differ, at least between the points (S) where the carcass reinforcement (7) becomes parallel to the tread reinforcement (8) and $(J'_T)$ respectively $(J''_T)$ where the carcass reinforcement (7) becomes parallel to the contour of the bead ring (9), by at most 1%.